# EUROPÄISCHE PATENTSCHRIFT

(11) **EP 4 631 838 B1**
(45) Veröffentlichungstag und Bekanntmachung des Hinweises auf die Patenterteilung: **09.09.2026**
(21) Anmeldenummer: 25162849.1
(22) Anmeldetag: 11.03.2025
(51) Int. Cl.: B62K 25/28

(54) **FAHRRAD MIT EINER FEDERUNG FÜR DAS HINTERRAD DES FAHRRADES**
BICYCLE WITH A SUSPENSION FOR THE REAR WHEEL OF THE BICYCLE
BICYCLETTE AVEC SUSPENSION POUR LA ROUE ARRIÈRE DE LA BICYCLETTE

(30) Priorität: 12.04.2024 DE 102024110244
(43) Veröffentlichungstag der Anmeldung: 15.10.2025
(73) Patentinhaber: Kalkhoff Werke GmbH, 49685 Emstek (DE)
(72) Erfinder: Schliewert, Frank, 49661 Cloppenburg (DE)
(74) Vertreter: Jabbusch, Matthias

(56) Entgegenhaltungen:
- US-A- 4 789 174
- US-A- 5 435 584

## Beschreibung

Die Erfindung betrifft ein Fahrrad mit einer Federung für das Hinterrad des Fahrrades, umfassend zumindest ein Feder-Dämpferelement für diese Federung, wobei das Feder-Dämpferelement in Fahrtrichtung des Fahrrades hinter dem Sitzrohr angeordnet ist und dass das Feder-Dämpferelement in Einbaulage am Fahrrad mit einem Ende am Rahmen des Fahrrades und mit dem anderen Ende an einer Hebelkinematik abgestützt ist, wobei die Hebelkinematik am Rahmen des Fahrrades und an einer Kettenstrebe jeweils angelenkt ist und wobei die Hebelkinematik (9) wenigstens zwei Linkagehebel (10,11) aufweist, wobei beide Linkagehebel (10,11) miteinander verbunden sind und ein erster Linkagehebel (10) am Rahmen (1) des Fahrrads angelenkt ist.

Fahrräder werden heute von großen Teilen der Bevölkerung im täglichen Leben eingesetzt. Waren es zunächst eher sportliche Fahrradmodelle, insbesondere Mountainbikes, die eine Federung für das Hinterrad des Fahrrades aufwiesen, so haben sich heute derartige Federungen auch für Stadtfahrräder oder Tourenfahrräder durchgesetzt. Eine Federung des Hinterrades ermöglicht eine bequemere Fahrt, mehr als das dies von einer gefederten Sattelstütze geleistet werden kann,

Fahrräder mit einem Fahrradrahmen ohne Oberrohr werden Tiefeinsteiger genannt. Landläufig werden sie als Damenfahrräder bezeichnet, sie ermöglichen ein bequemes Aufsteigen auf das Rad, auch bei Tragen eines Rocks. Wenn das Hinterrad eines Damenfahrrads mit einer Federung ausgerüstet werden soll, dann ist das Feder-Dämpferelement am Fahrrad unterzubringen. Bei bekannten Fahrrädern wurde eine Anordnung in Fahrtrichtung vor dem Sitzrohr des Fahrradrahmens vorgenommen. Damit wird das Feder-Dämpferelement gerade in dem freien Raum angeordnet, der eigentlich für den ungehinderten Aufstieg auf das Fahrrad zur Verfügung stehen soll.

Ein Fahrrad mit einer Federung für das Hinterrad des Fahrrades ist bereits aus der US 5 435 584 A bekannt. Dort ist ein Feder-Dämpferelement innerhalb des Sitzrohres des Fahrradrahmens angeordnet.

Die US 4 789 174 zeigt dagegen die gattungsgemäße Anordnung des Feder-Dämpferelementes in Fahrtrichtung des Fahrrades hinter dem Sitzrohr. Es sind dort auch Hebel einer Hebelkinematik gegeben, diese sind oberhalb der Horizontalebene der Kettenstreben angeordnet und als Druckhebel ausgebildet.

Der Erfindung liegt die Aufgabe zugrunde, ein Fahrrad der eingangs genannten Gattung aufzuzeigen, das eine kompakte Unterbringung des notwendigen Feder-Dämpferelementes für die Federung aufweist.

Diese Aufgabe ist erfindungsgemäß dadurch gelöst, dass die Linkagehebel in einer Horizontalebene unterhalb der Kettenstrebe angeordnet sind und dass der an der Kettenstrebe angelenkte Linkagehebel als Zugstab ausgebildet ist.

Bei dem erfindungsgemäßen Fahrrad ist das Feder-Dämpferelement nicht vor dem Sitzrohr, sondern hinter dem Sitzrohr angeordnet. Dadurch ist der Platz vor dem Sitzrohr und somit der Platz zum Aufsteigen auf das Rad und zum Fahrrad fahren auch mit einem Rock nicht eingeschränkt. Das Feder-Dämpferelement ist am Fahrradrahmen angelenkt, mit dem anderen Ende steht es auf einer Hebelkinematik auf. Diese Hebelkinematik ist gleichfalls am Rahmen des Fahrrades angelenkt, gleichzeitig aber auch an einer Kettenstrebe. In den Kettenstreben ist das Hinterrad aufgenommen, dieses soll ja gegenüber dem Fahrradrahmen mit einer Federung ausgerüstet werden. Die Hebelkinematik kann sich gegenüber dem Rahmen abstützen, dieser Abstützung dient das Feder-Dämpferelement.

Bei dem erfindungsgemäßen Fahrrad ist somit das Feder-Dämpferelement für die gewünschte Federung auf kompaktem Raum untergebracht. Zudem wird durch die Hebelkinematik ein Umlenken der Kräfte erreicht, woraus ein progressives Einfedern des Feder-Dämpferelementes resultiert. Das bedeutet, dass das Übersetzungsverhältnis von Federweg zu Dämpferweg nicht konstant ist, sondern mit zunehmendem Einfedern kleiner wird. Dadurch wird erreicht, dass am Anfang des Federweges ein weiches beziehungsweise großes Einfedern gegeben ist und zum Ende ein Verhärten der Federung vorliegt und damit ein Durchschlagen verhindert wird.

Die Hebelkinematik weist wenigstens zwei Linkagehebel auf, wobei beide Linkagehebel miteinander verbunden sind und ein erster Linkagehebel am Rahmen des Fahrrades angelenkt ist. Die Hebelkinematik besteht also nur aus zwei Linkagehebel, so dass sich ein einfacher und kompakter Aufbau ergibt. Beide Linkagehebel sind vorzugsweise miteinander über Gelenke verbunden, der erste Linkagehebel ist im Rahmen des Fahrrades angelenkt. Der zweite Linkagehebel ist an der Kettenstrebe angelenkt, so dass über die Hebelkinematik die Verbindung zwischen Kettenstreben und Fahrradrahmen gegeben ist.

Erfindungsgemäß ist vorgesehen, dass die Linkagehebel in einer Horizontalebene unterhalb der Kettenstrebe angeordnet sind. Mit dieser Anordnung wird ein unterhalb der Kettenstrebe ohnehin vorhandener Bauraum genutzt, der Bauraum oberhalb der Kettenstrebe kann für das Dämpferelement bereitgehalten werden. Die unterhalb der Kettenstrebe angeordneten Linkagehebel fügen sich in die Anordnung des Fahrradrahmens ein.

Aufgrund der Anordnung der Linkagehebel unterhalb der Kettenstrebe kann erfindungsgemäß der an der Kettenstrebe angelenkte Linkagehebel als Zugstab ausgebildet sein. Über einen Zugstab können Kräfte lagesicherer abgeleitet werden als bei einem Druckstab. Eine saubere Krafteinleitung in die Linkagehebel ist damit gewährleistet.

Nach einer Weiterbildung der Erfindung ist vorgesehen, dass die Kettenstrebe Bauteil einer Schwinge für das Hinterrad ist, wobei die Schwinge über ein Gelenk am Rahmen des Fahrrades angelenkt ist. Das Hinterrad ist in einer Schwinge aufgenommen, die über ein Gelenk angelenkt ist. Das Hinterrad kann über eine Kreisbahn mit Bezug auf dieses Gelenk bewegt werden. Damit das Hinterrad auf dieser Kreisbahn nicht bei durchschlägt, ist das Feder-Dämpferelement vorgesehen.

Das Feder-Dämpferelement ist vorzugsweise auf dem ersten Linkagehebel abgestützt. Der zweite Linkagehebel ist an der Kettenstrebe beziehungsweise an der Schwinge für das Hinterrad angelenkt, so dass die Kräfte des Hinterrades direkt in das Feder-Dämpferelement eingeführt werden können.

Zur weiteren Ausbildung der Erfindung ist vorgesehen, dass der zweite Linkagehebel als Gabelbauteil ausgebildet ist und mit seinen Gabelenden jeweils an einer Kettenstrebe beziehungsweise Schwinge angelenkt ist. Diese Anlenkpunkte befinden sich rechts und links neben dem Hinterradreifen. Das ergibt eine kompakte Bauform, da das Hinterrad zwischen die Gabelanlenkpunkte wandern kann. Das Hinterrad wandert nicht zu weit nach hinten, so dass das Fahrverhalten des Fahrrades nicht negativ beeinflusst ist.

Auch der erste Linkagehebel kann als Gabelbauteil ausgebildet sein, mit seinen Gabelenden kann er dann jeweils am Rahmen des Fahrrads angelenkt sein.

Separater Schutz wird beansprucht für einen Fahrradrahmen, der für ein Fahrrad mit den vorher beschriebenen Merkmalen geeignet ist.

Ein Ausführungsbeispiel eines erfindungsgemäßen Fahrrades ist in der Zeichnung dargestellt liegt es zeigen:
- Figur 1:: eine Seitenansicht eines Fahrrades,
- Figur 2:: eine maßstäbliche vergrößerte Teil-Seitenansicht des Fahrrades gemäß Figur 1, und
- Figur 3:: eine maßstäblich vergrößerte perspektivische Teilansicht des Fahrrades gemäß Figur 1.

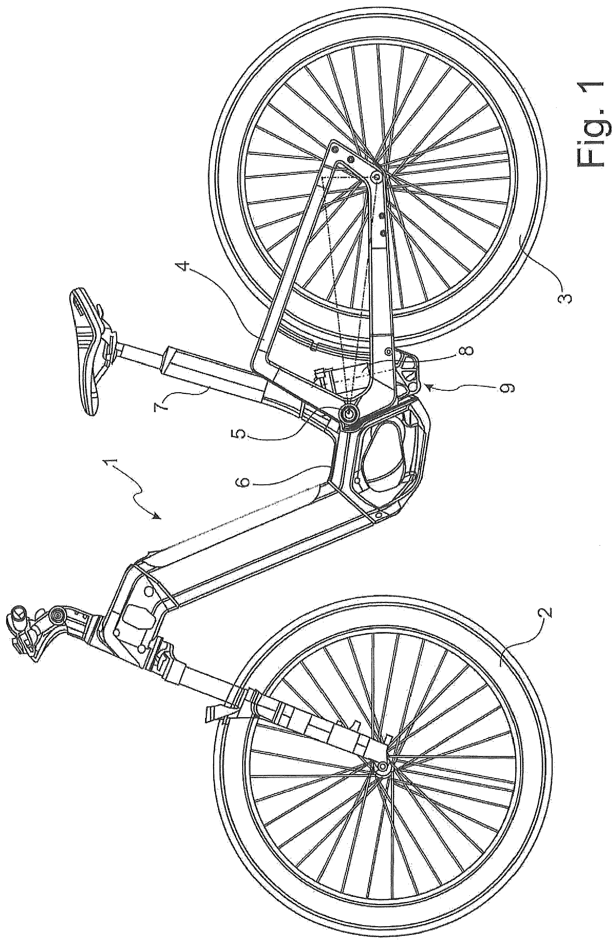

Das in Figur 1 gezeigte Fahrrad ist nicht mit allen Komponenten ausgestattet. Es ist ein Rahmen 1 vorhanden, ein Lenker und ein Sattel. Das Vorderrad 2 ist in einer Gabel aufgenommen, das Hinterrad 3 in einer Schwinge 4. Die Schwinge 4 ist über ein Gelenk 5 am Rahmen 1 im Bereich eines Antriebsgehäuses 6 angeordnet. Der Sattel ist in einem Sitzrohr 7 des Rahmens 1 aufgenommen.

Das in der Schwinge 4 aufgenommene Hinterrad 3 kann auf einer Kreisbahn um das Gelenk 5 bewegt werden. Diese Bewegung wird eingegrenzt und abgefangen durch ein Feder-Dämpferelement 8. Dieses Feder-Dämpferelement 8 ist in Fahrtrichtung hinter dem Sitzrohr 7 angeordnet.

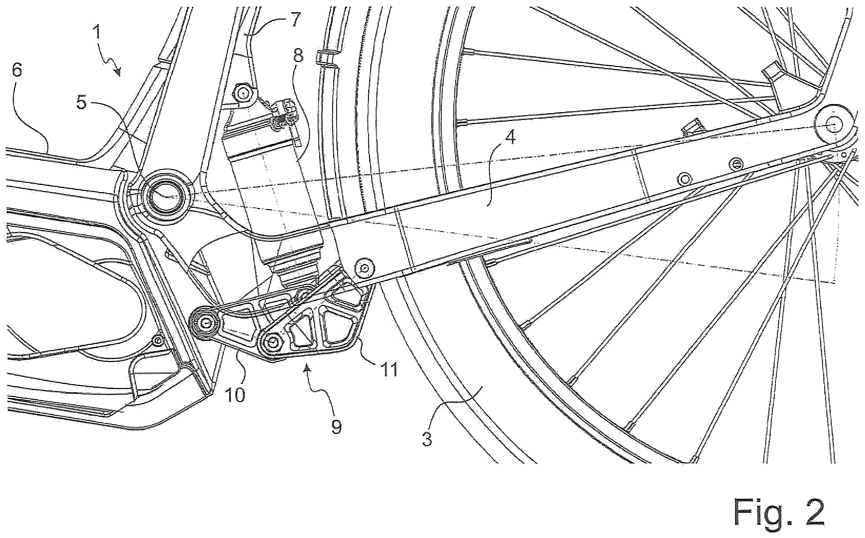

Figur 2 zeig das Feder-Dämpferelement 8 in seiner Anordnungsbereich zwischen dem Gehäuse 6 des Antriebes und dem Hinterrad 3. Das Feder-Dämpferelement 8 ist mit einem Ende am Sitzrohr 7 und damit am Rahmen 1 angelenkt, und mit dem anderen Ende steht das Feder-Dämpferelement 8 auf einer Hebelkinematik 9 auf. Die Hebekinematik 9 ist dabei aus zwei Linkagehebel 10, 11 ausgebildet. Der erste Linkagehebel 10 ist am Gehäuse 6 des Antriebes und somit am Rahmen 1 angelenkt. Dieser erste Linkagehebel 10 nimmt auch das Feder-Dämpferelement 8 auf. Der mit dem ersten Linkagehebel 10 verbundene zweite Linkagehebel 11 ist an der Schwinge 4 für das Hinterrad 3 angelenkt. Beide Linkagehebel 10, 11 sind gelenkig miteinander verbunden.

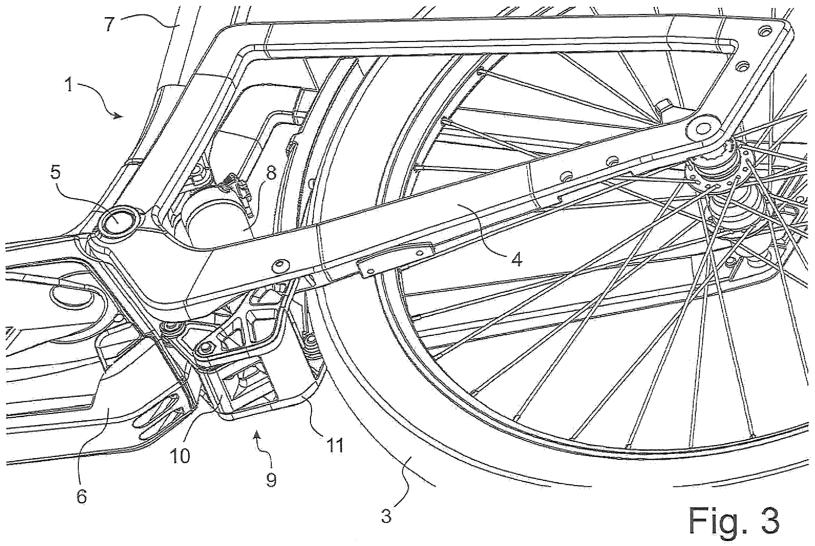

Figur 3 zeigt, dass die Linkagehebel 10, 11 jeweils als Gabelbauteile ausgebildet sind. Der Linkagehebel 11 ist mit seinen Gabelenden an der Schwinge 4 zu beiden Seiten des Hinterrades 3 angelenkt, das Hinterrad 3 kann dabei in den Raum zwischen beiden Gabelenden vorragen. Beim Linkagehebel 10 führt die Gabelbauform zu einem Anlenken an dem Gehäuse 6 zu dessen beiden Seiten.

## Patentansprüche

1. Fahrrad mit einer Federung für das Hinterrad des Fahrrades, umfassend zumindest ein Feder-Dämpferelement für diese Federung,
wobei das Feder-Dämpferelement (8) in Fahrtrichtung des Fahrrades hinter dem Sitzrohr (7) angeordnet ist und
das Feder-Dämpferelement (8) in Einbaulage am Fahrrad mit einem Ende am Rahmen (1) des Fahrrades und mit dem anderen Ende an einer Hebelkinematik (9) abgestützt ist, wobei die Hebelkinematik (9) am Rahmen (1) des Fahrrades und an einer Kettenstrebe jeweils angelenkt ist und wobei die Hebelkinematik (9) wenigstens zwei Linkagehebel (10,11) aufweist, wobei beide Linkagehebel (10,11) miteinander verbunden sind und ein erster Linkagehebel (10) am Rahmen (1) des Fahrrads angelenkt ist,
**dadurch gekennzeichnet,**
**dass** die Linkagehebel (10, 11) in einer Horizontalebene unterhalb der Kettenstrebe angeordnet sind und dass der an der Kettenstrebe angelenkte Linkagehebel (11) als Zugstab ausgebildet ist.

2. Fahrrad nach Anspruch 1, **dadurch gekennzeichnet, dass** die Linkagehebel (10,11) miteinander über Gelenke verbunden sind.

3. Fahrrad nach Anspruch 1 oder 2, **dadurch gekennzeichnet, dass** ein zweiter Linkagehebel (11) an der Kettenstrebe angelenkt ist.

4. Fahrrad nach Anspruch 3, **dadurch gekennzeichnet, dass** die Kettenstrebe Bauteil einer Schwinge (4) für das Hinterrad (3) ist, wobei die Schwinge (4) über ein Gelenk (5) am Rahmen (1) des Fahrrads angelenkt ist.

5. Fahrrad nach einem der vorhergehenden Ansprüche, **dadurch gekennzeichnet, dass** das Feder-Dämpferelement (8) auf dem ersten Linkagehebel (10) abgestützt ist.

6. Fahrrad nach einem der Ansprüche 3 bis 5, **dadurch gekennzeichnet, dass** der zweite Linkagehebel (11) als Gabelbauteil ausgebildet ist und mit seinen Gabelenden jeweils an einer Kettenstrebe angelenkt ist.

7. Fahrrad nach einem der vorhergehenden Ansprüche, **dadurch gekennzeichnet, dass** der erste Linkagehebel (10) als Gabelbauteil ausgebildet ist und mit seinen Gabelenden jeweils am Rahmen (1) des Fahrrades angelenkt ist.

8. Fahrradrahmen, Hebelkinematik (9) und Kettenstrebe
**dadurch gekennzeichnet,**
**dass** sie bei einem Fahrrad nach einem der Ansprüche 1 bis 7 einsetzbar sind.

## Claims

1. Bicycle with a suspension for the rear wheel of the bicycle, comprising at least one spring-damper element for this suspension,
wherein the spring-damper element (8) is arranged behind the seat tube (7) in the direction of travel of the bicycle, and
the spring-damper element (8), in the installed position on the bicycle, is supported with one end on the frame (1) of the bicycle and with the other end on a lever kinematics (9), wherein the lever kinematics (9) is articulated respectively on the frame (1) of the bicycle and on a chainstay, and wherein the lever kinematics (9) has at least two linkage levers (10, 11), wherein both linkage levers (10, 11) are connected to each other, and a first linkage lever (10) is articulated on the frame (1) of the bicycle,
**characterized in that**
the linkage levers (10, 11) are arranged in a horizontal plane underneath the chainstay, and the linkage lever (11) articulated on the chainstay is designed as a pull rod.

2. Bicycle according to claim 1, **characterized in that** the linkage levers (10, 11) are connected to each other via joints.

3. Bicycle according to claim 1 or 2, **characterized in that** a second linkage lever (11) is articulated on the chainstay.

4. Bicycle according to claim 3, **characterized in that** the chainstay is a component of a swingarm (4) for the rear wheel (3), wherein the swingarm (4) is articulated on the frame (1) of the bicycle via a joint (5).

5. Bicycle according to one of the preceding claims, **characterized in that** the spring-damper element (8) is supported on the first linkage lever (10).

6. Bicycle according to one of claims 3 to 5, **characterized in that** the second linkage lever (11) is designed as a fork component and is articulated with its fork ends respectively on a chainstay.

7. Bicycle according to one of the preceding claims, **characterized in that** the first linkage lever (10) is designed as a fork component, and is articulated with its fork ends respectively on the frame (1) of the bicycle.

8. Bicycle frame, lever kinematics (9), and chainstay **characterized in that** they can be used for a bicycle according to one of claims 1 to 7.

## Revendications

1. Bicyclette avec une suspension pour la roue arrière de la bicyclette, comprenant au moins un élément amortisseur à ressort pour cette suspension,
sachant que l' élément amortisseur à ressort (8) est disposé dans le sens de la marche de la bicyclette derrière le tube de selle (7) et
l'élément amortisseur à ressort (8) est supporté en situation de montage sur la bicyclette avec une extrémité sur le cadre (1) de la bicyclette et avec l'autre extrémité sur un ensemble cinématique à levier (9), sachant que l'ensemble cinématique à levier (9) est respectivement relié en articulation au cadre (1) de la bicyclette et à un support de base de chaîne et sachant que l'ensemble cinématique à levier (9) comporte au moins deux leviers de liaison articulée (10, 11), sachant que les deux leviers de liaison articulée (10, 11) sont reliés entre eux et un premier levier de liaison articulée (10) est relié en articulation au cadre (1) de la bicyclette,
**caractérisé en ce que**
les leviers de liaison articulée (10, 11) sont disposés dans un plan horizontal en dessous du support de base de chaîne et **en ce que** le levier de liaison articulée (11) relié en articulation au support de base de chaîne est constitué sous la forme d'une barre de traction.

2. Bicyclette selon la revendication 1, **caractérisée en ce que** les leviers de liaison articulée (10, 11) sont reliés entre eux par le biais d'articulations.

3. Bicyclette selon la revendication 1 ou 2, **caractérisée en ce qu'**un deuxième levier de liaison articulée (11) est relié en articulation au support de base de chaîne.

4. Bicyclette selon la revendication 3, **caractérisée en ce que** le support de base de chaîne est un composant d'un bras oscillant (4) pour la roue arrière (3), sachant que le bras oscillant (4) est relié en articulation au cadre (1) de la bicyclette par le biais d'une articulation (5).

5. Bicyclette selon l'une quelconque des revendications précédentes, **caractérisée en ce que** l'élément amortisseur à ressort (8) est supporté sur le premier levier de liaison articulée (10).

6. Bicyclette selon l'une quelconque des revendications 3 à 5, **caractérisée en ce que** le deuxième levier de liaison articulée (11) est constitué en tant que composant à fourche et est respectivement relié en articulation avec ses extrémités de fourche à un support de base de chaîne.

7. Bicyclette selon l'une quelconque des revendications précédentes, **caractérisée en ce que** le premier levier de liaison articulée (10) est constitué sous la forme d'un composant à fourche et est respectivement relié en articulation avec ses extrémités de fourche au cadre (1) de la bicyclette.

8. Cadre de bicyclette, ensemble cinématique à leviers (9) et support de base de chaîne, **caractérisés en ce qu'**ils peuvent être utilisés pour une bicyclette selon l'une quelconque des revendications 1 à 7.
